# EUROPEAN PATENT SPECIFICATION

(11) **EP 3 764 788 B1**
(45) Date of publication and mention of the grant of the patent: **13.11.2024**
(21) Application number: 19712702.0
(22) Date of filing: 11.03.2019
(51) Int. Cl.: A01P 3/00, A01P 13/00

(54) **AGROCHEMICAL OIL DISPERSIONS**
AGROCHEMISCHE ÖLDISPERSIONEN
DISPERSIONS D'HUILE AGROCHIMIQUE

(30) Priority: 13.03.2018 IT 201800003500
(43) Date of publication of application: 20.01.2021
(73) Proprietor: Lamberti SPA, 21041 Albizzate (VA) (IT)
(72) Inventor: MANISCALCO, Sabrina, 21052 Busto Arsizio (VA) (IT); DE PELLEGRINI, Federico, 21041 Albizzate (VA) (IT); FLORIDI, Giovanni, 28100 Novara (IT); LI BASSI, Giuseppe, 21026 Gavirate (VA) (IT)
(74) Representative: Giaroni, Paola
(86) International application number: PCT/EP2019/056052
(87) International publication number: WO 2019/175118

(56) References cited:
- EP-A1- 2 789 236
- WO-A1-2008/074837
- WO-A1-2015/145105
- WO-A2-03/035243
- US-A1- 2004 229 984
- US-A1- 2007 027 034
- US-A1- 2008 286 222
- US-A1- 2014 284 056

## Description

### TECHNICAL FIELD

The present invention relates to agrochemical oil dispersions and methods of preparation thereof, wherein said agrochemical oil dispersions contain thickeners selected among N-acyl amino acid alkylamides.

### BACKGROUND OF THE ART

A great potential still exists to improve pesticide efficiency and thus reduce their input into the environmental and food chain. Proper formulations and efficient delivery systems are the key elements in the performance of any product. One of the most important ways to improve the efficacy of pesticides and minimize their impact on non-target organisms is through increased penetration of active ingredient into plant foliage. For this reason, the use of vegetable oils (seed oils), together with the use of non-noxious products, has been recently increased since they are more biodegradable and originate from renewable resources. In addition, these oils are very useful in pesticide formulations as the oil is expected to contribute to the biological activity of the plant.

In this context, agrochemical formulations such as oil dispersions (OD) are attracting increasing interest. Oil dispersions are liquid formulations defined as stable suspensions of active ingredients in a water-immiscible fluid, which may contain other dissolved active ingredients, and are intended for dilution with water before use.

Oil dispersion (OD), as a formulation type in the pesticide industry, has become more important over the past few years. This increased importance is due to: new moisture-sensitive active ingredients; poor compatibility of active ingredient mixtures; the need to improve adjuvancy properties; customer preference of liquid formulations.

A disadvantage of the existing OD formulations is that such formulations frequently show phase separation after storage. Thus, storage even at ambient temperatures frequently leads to aggregation effects, lump formation or pronounced settling of the suspended phase. In the worst cases, the effects are irreversible, i.e. even shearing, for example by stirring, cannot re-homogenize the formulation.

A common method to solve this problem is to add to the dispersions, as anti-settling agent, a thickener that increases the viscosity of the system and acts as suspending agent by reducing the settling rate of the particles.

Typical thickeners for waterless organic systems include organoclays, such as Bentone^{®}. Organoclays are made from natural smectite, hectorite or montmorillonite clays by reacting the hydrophilic clay with quaternary ammonium compounds, so that it becomes organophilic and therefore compatible with non-aqueous media. The use of these thickeners is described for example in WO 2009/004281, EP 789,999, GB 2,067,407, EP 149,459 and GB 2,008,949. Unfortunately, organoclays have to be carefully dispersed and need the presence of a chemical activator in order to function as anti-settling agents with good gel strength. If the organoclay is not well dispersed or chemically activated, the result is poor gel strength and hence limited physical stability of the product.

Other known thickeners are vegetable oil derivatives, silica derivatives and synthetic polymers that are described, for example, in WO 2008/135854 and US 5,599,768.

In more recent years, also polyamides have been proposed and used as thickeners for oil dispersions. In this field, Patent Application WO 2012/080208 describes the preparation of an agrochemical oil dispersion comprising a thickener which is an amide obtained by reacting a polyhydroxystearic acid with diethylene triamine and/or triethylene tetramine. Patent Application WO 2015/145105 relates to agrochemical oil-based active formulations comprising a thickener based on a polyamide derived from a dimer fatty acid and a diamine.

The handling of most of prior art thickeners is very difficult and/or harmful because they are mainly very fine and light powders. In addition, said thickeners are difficult to dissolve and homogenize without the formation of gels or lumps and continued and careful monitoring of the process is required.

Moreover, the polyamide-based thickeners of the prior art tend to lose efficacy in their thickening properties when raising the temperature, so that it is difficult to obtain acceptable agrochemical oil-based formulations, i.e. which are sufficiently stable at 54 °C for at least 14 days, as the FAO Pesticide Specifications recommend.

For these reasons, a need still exists for a polyamide-based thickener that improves the physical stability of oil dispersions and oil suspension concentrates of a variety of agrochemical active ingredients.

We have now found that thickeners based on N-acyl amino acid alkylamides can be used to prepare agrochemical oil dispersions which are stable at 54 °C for at least 14 days.

Accordingly, the present invention concerns thickeners suitable for preparing a stable dispersion of agrochemical ingredients in an oil, said dispersion and a method for forming said dispersion.

### SUMMARY OF THE INVENTION

It is therefore an object of the present invention an agrochemical oil dispersion comprising:
a) from 30 to 85 % by weight (wt%) of a liphophilic phase
b) from 0.01 to 10 wt% of at least one thickener, wherein said thickener is a N-acyl amino acid alkylamide of Formula I: 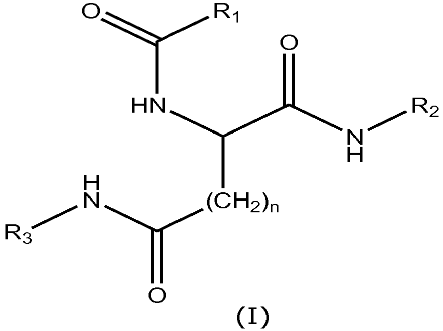 wherein:
   - R₁ represents a linear or branched alkyl or alkenyl chain having from 1 to 30 carbon atoms
   - R₂ and R₃ each independently represent a linear or branched alkyl or alkenyl chain having from 1 to 20 carbon atoms
   - n represents 1 or 2
c) from 5 to 30 wt% of a nonionic surfactant, an anionic surfactant or a mixture thereof
d) from 2 to 70 wt% of at least one agrochemical active ingredient dispersed in said lipophilic phase.

A further object of the invention is a method of preparing the above mentioned agrochemical dispersion comprising the following steps:
i. preparing a mixture of the thickener of Formula I with the surfactant c)
ii. dispersing said mixture in the lipophilic phase a)
iii. adding to the mixture at least one agrochemical active ingredient d).

### DETAILED DESCRIPTION OF THE INVENTION

Preferably, the agrochemical oil dispersion of the invention comprises:
a) from 60 to 80 % by weight (wt%) of a liphophilic phase
b) from 0.1 to 2 wt% of at least one thickener, wherein said thickener is a N-acyl amino acid alkylamide of Formula I: 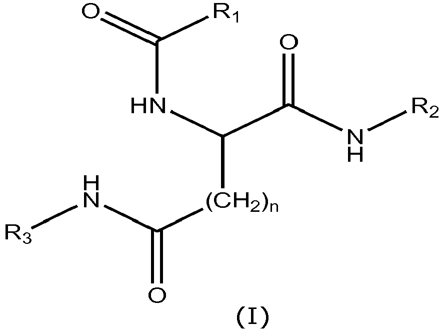 wherein:
   - R₁ represents a linear or branched alkyl or alkenyl chain having from 4 to 20 carbon atoms
   - R₂ and R₃ each independently represent a linear or branched alkyl or alkenyl chain having from 2 to 10 carbon atoms
   - n represents 2
   - R₂ and R₃ are the same
c) from 10 to 25 wt% of a nonionic surfactant, an anionic surfactant or a mixture thereof
d) from 4 to 20 wt% of at least one agrochemical active ingredient dispersed in said lipophilic phase.

According to another preferred embodiment, the agrochemical oil dispersion of the invention comprises:
a) from 35 to 70 % by weight (wt%) of a liphophilic phase
b) from 0.1 to 5 wt% of at least one thickener, wherein said thickener is a N-acyl amino acid alkylamide of Formula I: 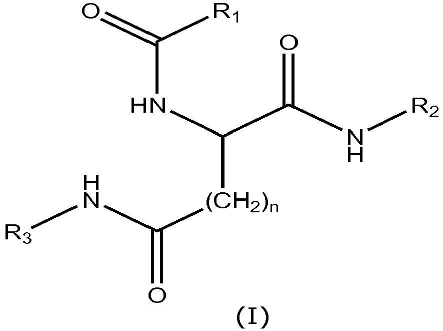 wherein:
   - R₁ represents a linear or branched alkyl or alkenyl chain having from 4 to 20 carbon atoms
   - R₂ and R₃ each independently represent a linear or branched alkyl or alkenyl chain having from 2 to 10 carbon atoms
   - n represents 2
   - R₂ and R₃ are the same
c) from 10 to 25 wt% of a nonionic surfactant, an anionic surfactant or a mixture thereof
d) from 4 to 50 wt% of at least one agrochemical active ingredient dispersed in said lipophilic phase.

The N-acyl amino acid alkylamides of Formula (I) are derivatives of glutamic acid (i.e. n=2) or aspartic acid (i.e. n=1). Preferably, they are derivatives of glutamic acid.

Particularly preferred N-acyl amino acid alkylamides are N-lauroyl-L-glutamic acid dibutylamide, also referred to as dibutyllauroyl glutamide (commercially available from Ajinomoto Co., under the trade name "Gelatinization Agent GP-1") and N-2-ethylhexanoyl-L-glutamic acid dibutylamide (commercially available from Ajinomoto Co., under the trade name "Gelatinization Agent EB-21"). Although these compounds are well known as gelling agents for oil phases, their use as thickeners for preparing stable agrochemical oil dispersions, whose preparation is usually a challenging task, is not described, as far as the Applicant knows.

According to another embodiment, other suitable N-acyl amino acid alkylamides are N-cocoyl-L-glutamic acid dibutylamide and N-cocoyl-L-glutamic acid dicocoylamide

Suitable agrochemical active ingredients of the agrochemical oil dispersion are substantially solid materials that are oil-insoluble at room temperature such as, for example, fungicides, bactericides, insecticides, acaricides, nematicides, herbicides, aracnicides, insect growth regulators, repellents, plant growth regulators, plant nutrients or mixtures thereof. Preferably, the agrochemical active ingredient is selected among fungicides, bactericides, insecticides, acaricides, nematicides, herbicides, aracnicides or mixtures thereof.

Examples of fungicides which may be mentioned are: 2-anilino-4-methyl-6-cyclopropyl-pyrimidine; 2',6'-dibromo-2-methyl-4'-trifluoro-methoxy-4'-trifluoromethyl-1,3-thiazole-5-carboxanilide; 2,6-dichloro-N-(4-trifluoro-methylbenzyl)-benzamide; (E)-2-methoximino-N-methyl-2-(2-phenoxyphenyl)-acetamide; 8-hydroxyquinoline sulphate; methyl(E)-2-{2-[6-(2-cyanophenoxy)-pyrimidin-4-yloxy]-phenyl}-3-methoxyacrylate; methyl(E)methoximino[alpha-(o-tolyloxy)-o-tolyl]-acetate; 2-phenylphenol (OPP), aldimorph, ampropylfos, anilazine, azaconazole, benalaxyl, benodanil, benomyl, binapacryl, biphenyl, bitertanol, blasticidin-S, bromuconazole, bupirimate, buthiobate, calcium polysulphide, captafol, captan, carbendazim, carboxin, quinomethionate, chloroneb, chloropicrin, chlorothalonil, chlozolinate, cufraneb, cymoxanil, cyproconazole, cyprofuram, carpropamide, dichlorophen, diclobutrazole, dichlofluanid, diclomezin, dicloran, diethofencarb, difenoconazole, dimethirimol, dimethomorph, diniconazole, dinocap, diphenylamine, dipyrithion, ditalimfos, dithianon, dodine, drazoxolon, edifenphos, epoxyconazole, ethirimol, etridiazole, fenarimol, fenbuconazole, fenfuram, fenitropan, fenpiclonil, fentin acetate, fentin hydroxide, ferbam, ferimzone, fluazinam, fludioxonil, fluoromide, fluquinconazole, flusilazole, flusulfamide, flutolanil, flutriafol, folpet, fosetyl-aluminium, fthalide, fuberidazole, furalaxyl, fenhexamide, guazatine, hexachlorobenzene, hexaconazole, hymexazole, imazalil, imibenconazole, iminoctadine, iprobenfos (IBP), iprodion, isoprothiolan, iprovalicarb, kasugamycin, copper preparations, such as: copper hydroxide, copper naphthenate, copper oxychloride, copper sulphate, copper oxide, oxinecopper and Bordeaux mixture; mancopper, mancozeb, maneb, mepanipyrim, mepronil, metalaxyl, metconazole, methasulfocarb, methfuroxam, metiram, metsulfovax, mydobutanil, nickel dimethyldithiocarbamate, nitrothalisopropyl, nuarimol, ofurace, oxadixyl, oxamocarb, oxycarboxine, pefurazoate, penconazole, pencycuron, phosdiphen, pimaricin, piperalin, polyoxine, probenazole, prochloraz, procymidon, propamocarb, propiconazole, propineb, pyrazophos, pyrifenox, pyrimethanil, pyroquilon, quintozene (PCNB), quinoxyfen, sulphur and sulphur preparations, tebuconazole, tecloftalam, tecnazene, tetraconazole, thiabendazole, thicyofen, thiophanate-methyl, thiram, toldlophos-methyl, tolylfluanid, triadimefon, triadimenol, triazoxide, trichlamide, tricyclazole, tridemorph, trifiumizole, triforin, triticonazole, trifioxystrobin, validamycin A, vinclozolin, zineb, ziram, ciproconazole, dodine, fenamidone, fenexamide, fluopicolide, fluoxastrobin, fosetyl-aluminium, iprovalicarb, pencycuron, prothioconazole, spiroxamina, triadimenol, trifloxystrobin, azoxystrobin, acibenzolar-S-methyl, ciprodinil, mandipropamid, fenpropidin, boscalid, kresoxim-methyl, pyraclostrobin, dimetomorf, fenpropimorf, metraphenone, tolclofosmethyl and 2-[2-(1-chloro-cyclopropyl)-3-(2-chlorophenyl)-2-hydroxypropyl]-2,4-dihydro-[1,2,4]-triazole-3-thione.

Examples of bactericides which may be mentioned are:
bronopol, dichlorophen, nitrapyrin, nickel dimethyldithiocarbamate, kasugamycin, octhilinon, furancarboxylic acid, oxytetracycline, probenazole, streptomycin, tecloftalam, copper sulphate and other copper preparations.

Examples of insecticides, acaricides and nematicides which may be mentioned are:
abamectin, acephate, acrinathrin, alanycarb, aldicarb, alphamethrin, amitraz, avermectin, AZ 60541, azadirachtin, azinphos A, azinphos M, azocyclotin, *Bacillus thuringiensis,* 4-bromo-2-(4-chlorophenyl)-1-(ethoxymethyl)-5-(trifluoromethyl)-pyrrole-3-carbonitrile, bendiocarb, benfuracarb, bensultap, betacyfluthrin, bifenthrin, BPMC, brofenprox, bromophosa, bufencarb, buprofezin, butocarboxine, butylpyridaben, cadusafos, carbaryl, carbofuran, carbophenothion, carbosulfan, cartap, chloethocarb, chlaretoxyfos, chlorfenvinphos, chlorfluazuron, chlormephos, N-[(6-chloro-3-pyridinyl)-methyl]-N'-cyano-N-methyl-ethaneimidamide, chlorpyrifos, chlorpyrifos M, cis-resmethrin, clocythrin, clofentezin, cyanophos, cycloprothrin, cyfluthrin, cyhalothrin, cyhexatin, cypermethrin, cyromazin, deltamethrin, demeton-M, demeton-S, demeton-S-methyl, diafenthiuron, diazinon, dichlofenthion, dichlorvos, dicliphos, dicrotophos, diethion, diflubenzuron, dimethoate, dimethylvinphos, dioxathion, disulfoton, emamectin, esfen valerate, ethiofencarb, ethion, ethofenprox, ethoprophos, etrimphos, fenamiphos, fenazaquin, fenbutatin oxide, fenitrothion, fenobucarb, fenothiocarb, fenoxycarb, fenpropathrin, fenpyrad, fenpyroximate, fenthion, fenvalerate, fipronil, fluazuron, flucycloxuron, flucythrinate, flufenoxuron, flufenprox, fluvalinate, fonophos, formothion, fosthiazate, fubfenprox, furathiocarb, HCH, heptenophos, bexaflumuron, hexythiazox, imidacloprid, iprobenfos, isazophos, isofenphos, isoprocarb, isoxathion, ivermectin, lambdacybalothrin, lufenuron, malathion, mecarbam, mevinphos, mesulfenphos, metaldehyde, methacrifos, methamidophos, methidathion, methiocarb, methomyl, metolcarb, milbemectin, monocrotophos, moxidectin, naled, NC 184, nitenpyram, omethoate, oxamyl, oxydemethon M, oxydeprofos, parathion AL, parathion ML, permethrin, phenthoate, phorate, phosalon, phosmet, phosphamidon, phoxim, pirimicarb, pirimiphos M, pirimiphos A, profenophos, promecarb, propapbos, propoxur, prothiophos, prothoate, pymetrozine, pyrachlophos, pyridaphenthion, pyresmethrin, pyrethrum, pyridaben, pyrimidifen, pyriproxifen, quinalphos, salithion, ebufos, silafluofen, sulfotep, sulprofos, tebufenozide, tebufenpyrad, tebupirimiphos, teflubenzuron, tefluthrin, temephos, terbam, terbufos, tetrachlorvinphos, thiacloprid, thiafenox, thiamethoxam, thiodicarb, thiofanox, thiomethon, thionazine, thuringiensin, tralomethrin, transfluthrin, triarathen, triazophos, triawron, trichlorfon, triflumuron, trimethacarb, vamidothion, XMC, xylylcarb, zetamethrin, ethoprophos, fenpyroximate, methoxyfenozide, spinosad, spirodiclofen, thiacloprid, cypermethrine, alphacypermethrine, alphametrine and metaflumizone.

Examples of herbicides which may be mentioned are:
anilides, such as, for example, diflufenican and propanil; arylcarboxylic acids, such as, for example, dichlorpicolinic acid, dicamba and picloram; aryloxyalkanoic acids, such as, for example, 2,4-D, 2,4-DB, 2,4-DP, Fluroxypyr, MCPA, MCPP and triclopyr; aryloxy-phenoxy-alkanoic acid esters, such as, for example, diclofop-methyl, fenoxapropethyl, Fluazifopbutyl, haloxyfop-methyl and quizalofop-ethyl; azinones, such as, for example, chloridazon and norflurazon; carbamates, such as, for example, chlorpropham, desmedipham, phenmedipham and propham; chloroacetanilides, such as, for example, alachlor, acetochlor, butachlor, metazachlor, metolachlor, pretilachlor and propachlor; dinitroarilines, such as, for example, oryzalin, pendimethalin and trifluralin; diphenyl ethers, such as, for example, acifluorfen, bifenox, fluoroglycofen, fomesafen, halosafen, lactofen and oxyfluorfen; ureas, such as, for example, chlortoluron, diuron, fluometuron, isoproturon, linuron and methabenzthiazuron; hydroxylamines, such as, for example, alloxydim, clethodim, cycloxydim, sethoxydim and tralkoxydim; imidazolinones, such as, for example, imazethapyr, imazamethabenz, imazapyr and imazaquin; nitriles, such as, for example, bromoxynil, dichlobenil and ioxynil; oxyacetamides, such as, for example, mefenacet; sulphonylureas, such as, for example, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flupyrsulfuron-methyl-sodium, foramsulfuron, halosulfuron-methyl, imazosulfuron, iodosulfuron-methyl-sodium, metsulfuron-methyl, nicosulfuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron, triflusulfuron-methyl; triketones such as, for example, mesotrione, tembotrione, topramezone, fenquinotrione and sulcotrione; thiocarbamates, such as, for example, butylate, cycloate, diallate, EPTCL, esprocarb, molinate, prosulfocarb, thiobencarb and triallate; triazines, such as, for example, atrazine, cyanazine, simazine, simetryne, terbutryne and terbutylazine; triazinones, such as, for example, hexazinon, metarnitron and metribuzin; others, such as, for example, aminotriazole, benfuresate, bentazone, cinmethylin, clomazone, clopyralid, difenzoqual, dithiopyr, ethofumesate, fluorochloridone, glufosinate, glyphosate, isoxaben, pyridate, quinchlorac, quinmerac, sulfosate and tridiphane, aclodifen, bap, bispyribac-sodium, ethoxysulfuron, flufenacet,isoxadifen ethyl, isoxaflutole, mefenpyr diethyl, florasulam, clodinafop propargyl, pinoxaden, trinexapac ethyl, dimethenamide-P, imazamox, profoxydim, tepraloxidim. In addition, 4-amino-N-(1,1-dimethylethyl)-4,5-dihydro-3-(1-methylethyl)-5-oxo-1H-1,2,4-triazole-carboxamide and 2-((((4,5-dihydro-4-methyl-5-oxo-3-propoxy-1H-1,2,4-triazol-1-yl)carbonyl)amino)sulfonyl) methyl sodium benzoate may be mentioned.

Examples of plant growth regulators which may be mentioned are chlorocholine chloride and ethephon.

Examples of repellents which may be mentioned are diethyl-toluamide, ethylhexane-diol and buto-pyronoxyl.

Examples of plant nutrients which may be mentioned are customary inorganic or organic fertilizers for supplying plants with macro- and/or micro-nutrients, such as: ammonium salts, such as ammonium sulfate, ammonium bisulfate, ammonium salts of carboxylic acids, ammonium chloride, ammonium carbonate, ammonium phosphate, urea and urea derivatives; phosphate sources, such as phosphoric salts (MAP monoammoniumphosphate, DAP diammoniumphosphate); potash sources, like potassium phosphate and mono- or di-potassium carbonate; compounds containing micronutrients and secondary nutrients like Zinc, Manganese, Magnesium, Iron, Calcium, Nickel, Molibdenum, Sulfur, Boron, and their chelated salts; polycarboxylic acids, such as citric acid; and mixture thereof; protein derivatives and hydrolyzed proteins and mixture thereof. Preferred plant nutrients are MAP, ammonium sulfate, sulfur and urea.

Other classes of agrochemical active ingredients that are suitable for being formulated as oil dispersions, such as those which are substantially oil-insoluble solid materials at room temperature, will be clearly understood by those skilled in the art or can be found, for example, in "The Pesticide Manual", 15th edition, The British Crop Protection Council, 2009, and the literature cited therein.

Preferred classes of agrochemical active ingredients suitable for formulating the oil dispersion of the invention are sulfonylureas, sulfamylureas, sulfonamides, imidazolinones, pyrimidinyloxypyridinecarboxylic or pyrimidyloxybenzoic acid derivatives; triketones; neonicotinoids; avermectins; pyrethroids; bisamides; triazoles; mandelamides and strobilurins; alkanamides; anilinopyrimidines; arylaminopropionic acids; aryloxyalkanoic acids; aryloxyphenoxypropionates; benzamides; benzimidazoles; chloroacetamides; cyclohexanedione oximes; dicarboximides; dinitroanilines; diphenyl ethers; imidazoles; hydroxybenzonitriles; isoxazoles; morpholines; guanidines; carbamates, dithiocarbamates, dimethyldithiocarbamates; phosphonates; phthalimides; sulphamides; non-ester pyrethroids; organophosphorus; oxime carbamates; phenylamides; phosphinic acids; pyrazoles; pyridines; pyridinecarboxamides; pyridinecarboxylic acids; quinolinecarboxylic acids; semi-carbazones; triazines; triazinones; ureas, benzoylureas. Most preferred agrochemical active ingredients belong to the classes of sulfonylureas or triketones, especially of solfonylureas.

Suitable examples of sulfonylurea herbecides are amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flupyrsulfuron-methyl-sodium, foramsulfuron, halosulfuron-methyl, imazosulfuron, iodosulfuron-methyl-sodium, metsulfuron-methyl, nicosulfuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron, triflusulfuron-methyl.

Among the sulfonylureas, nicosulfuron is particularly preferred.

Suitable examples of triketones include mesotrione, tembotrione, topramezone, fenquinotrione and sulcotrione.

Among the triketones, mesotrione is particularly preferred.

The lipophilic phase is a water-insoluble, liquid organic medium and may be (but not limited to) any of those agricultural oils commonly used in the trade for making oil dispersions for agricultural use. Suitable agricultural oils in the dispersions of the invention are, for example:
- vegetable oils such as liquid triglycerides for example olive oil, kapok oil, castor oil, papaya oil, camellia oil, palm oil, sesame oil, corn oil, rice bran oil, peanut oil, cotton seed oil, soybean oil, rapeseed oil, linseed oil, tung oil, sunflower oil, safflower oil, or also transesterification products thereof, e.g. alkyl esters, such as rapeseed oil methyl ester or rapeseed oil ethyl ester;
- linear or branched C₈ to C₃₀ paraffins having boiling points above 140 °C, for example nonane, decane, undecane, dodecane, tridecane, tetradecane, pentadecane, hexadecane, their mixtures, or mixtures thereof with higher boiling homologs, such as hepta-, octa-, nonadecane, eicosane, heneicosane, docosane, tricosane, tetracosane, pentacosane, and the branched chain isomers thereof;
- aromatic or cycloaliphatic hydrocarbons, which may be unsubstituted or substituted, C₇- to C₁₈-hydrocarbon compounds such as mono- or polyalkyl-substituted benzenes, or mono- or polyalkyl-substituted naphthalenes;
- animal oil, such as whale oil, cod-liver oil, or mink oil;
- liquid esters of C₁ to C₁₂ monoalcohols or polyols, for example butanol, n-octanol, i-octanol, dodecanol, cyclopentanol, cyclohexanol, cyclooctanol, ethylene glycol, propylene glycol or benzyl alcohol, with C₂ to C₁₀ carboxylic or polycarboxylic acids, such as caproic acid, capric acid, caprylic acid, pelargonic acid, succinic acid and glutaric acid; or with aromatic carboxylic acids such as benzoic acid, toluic acid, salicylic acid and phthalic acid. Esters which can be used in the oil dispersions of the invention are thus, for example, benzyl acetate, caproic acid ethyl ester, pelargonic acid ethyl ester, benzoic acid methyl or ethyl ester, salicylic acid methyl, propyl, or butyl ester, diesters of phthalic acid with saturated aliphatic or alicyclic C₁ to C₁₂ alcohols, such as phthalic acid dimethyl ester, dibutyl ester, diisooctyl ester;
- liquid amides of C₁-C₅ amines, alkylamines or alkanolamines with C₆-C₁₈ carboxylic acids;
- mixtures thereof.

Preferably the lipophilic phase is obtained from renewable resources and is a vegetable oil or a transesterification product thereof. Particularly preferred are corn oil, soybean oil, sunflower oil or rapeseed oil or transesterification products thereof such as rapeseed oil methyl esters, ethyl esters, propyl esters, butyl esters, etc.

The agrochemical oil dispersion of the invention is substantially free of water, i.e. it contains less than 10% by weight, preferably less than 5% by weight of water, more preferably less than 1% by weight.

The agrochemical oil dispersion of the invention comprises from 5 to 30 wt%, preferably from 10 to 25 wt%, of a nonionic surfactant, an anionic surfactant or a mixture thereof, preferably a nonionic surfactant. Surfactants are used not only to improve dispersion and to emulsify oil upon dilution in water, but also to increase suspension stability, wetting ability, penetration and translocation, and to provide the mixing ability and suspension/emulsion stability of a product after dilution.

Suitable non ionic surfactants are:
- polyalkoxylated, preferably polyethoxylated, saturated or unsaturated aliphatic alcohols, having 8 to 24 carbon atoms in the alkyl radical, which is derived from the corresponding fatty acids or from petrochemical products, and having 1 to 100, preferably 4 to 40, ethylene oxide units (EO);
- polyalkoxylated, preferably polyethoxylated, arylalkylphenols, such as, for example, tristyrylphenol having an average degree of ethoxylation of between 8 and 80, preferably from 16 to 40;
- polyalkoxylated, preferably polyethoxylated, alkylphenols having one or more alkyl radicals, such as, for example, nonylphenol or tri-sec-butylphenol, and a degree of ethoxylation of between 2 and 40, preferably from 4 to 20;
- polyalkoxylated, preferably polyethoxylated, hydroxy fatty acids triglycerides or derivatives thereof, such as, for example, castor oil, having a degree of ethoxylation of between 10 and 80;
- sorbitan or sorbitol esters with fatty acids or polyalkoxylated, preferably polyethoxylated, sorbitan or sorbitol esters of fatty acids;
- polyalkoxylated, preferably polyethoxylated, fatty amines;
- di- and tri-block copolymers, for example from alkylene oxides, for example from ethylene oxide and propylene oxide, having average molar masses between 200 and 8000 g/mol, preferably from 1000 to 4000;
- alkylpolyglycosides or polyalkoxylated, preferably polyethoxylated, alkylpolyglycosides.

Preferred nonionic surfactants are polyethoxylated hydroxy fatty acids triglycerides or derivatives thereof, in particular fatty esters thereof. Suitable anionic surfactants are for example:
- polyalkoxylated, preferably polyethoxylated, surfactants which are ionically modified, for example by conversion of the terminal free hydroxyl function of the alkylene oxide block into a sulfate or phosphate ester;
- alkali metal and alkaline earth metal salts of alkylarylsulfonic acids having a straight-chain or branched alkyl chain;
- alkali metal and alkaline earth metal salts of paraffin-sulfonic acids and chlorinated paraffin-sulfonic acids;
- polyelectrolytes, such as lignosulfonates, condensates of naphthalenesulfonate and formaldehyde, polystyrenesulfonate or sulfonated unsaturated or aromatic polymers;
- anionic esters of alkylpolyglycosides, such as alkylpolyglucoside sulfosuccinate or citrate;
- sulfosuccinates which are esterified once or twice with linear, or branched aliphatic, cycloaliphatic and/or aromatic alcohols, or sulfosuccinates which are esterified once or twice with (poly)alkylene oxide adducts of alcohols.

Preferred anionic surfactants are salts of alkylarylsulfonic and sulfosuccinic acids, and polyelectrolytes from the polycondensation of naphthalenesulfonate and formaldehyde.

The agrochemical oil dispersion of the invention can comprise from 0 to 10 wt% of additional thickeners to improve the stability of the composition. Suitable additional thickeners are natural oils and derivatives thereof (such as hydrogenated castor oil), bentones and modified silica.

The oil dispersion according to the invention can comprise from 0 to 10 wt% of additives commonly used in this field and well known to those expert in the art, such as dispersing agents, wetting agents, antidrift agents, penetrants, stickers and spreaders.

In addition to each of the mentioned components said oil dispersion may also comprise from 0 to 10 wt% of other agronomic additives and "crop management" substances such as oil-soluble agrochemical active ingredients, water mixing and/or water soluble carriers and/or deflocculation agents (e.g., kaolin, lignin compounds), antifoam agents (e.g., silicon-based), antifreeze agents, dyes (e.g., azo dyes), preservatives (e.g., biocide and/or antioxidant), fillers, perfumes, evaporation inhibitors, pH modulators, etc.

According to the invention, the agrochemical oil dispersion can be prepared in any known manner. Advantageously, the thickeners of the invention can be added to the formulation before the milling step. Preferably, the method of preparing the agrochemical dispersion comprises the following steps:
i. preparing a mixture of the thickener of Formula I with the surfactant c), under stirring and by heating at a temperature comprised between 120 and 200 °C
ii. dispersing said mixture in the lipophilic phase a)
iii. adding to the mixture at least one agrochemical active ingredient d).

The mixture is then homogeneized and subjected to milling, which can be carried out in a colloid mill, ball mill, sand mill, and preferably in grinding ball mills, so that the final average particle size is below 30 microns, preferably below 20 microns.

The agrochemical oil dispersion can be diluted with water or water solutions of agronomic compounds before use to produce a sprayable composition which is used in treating plants or increasing plant growth. Dilution in water usually results in suspensions, emulsions, suspoemulsions or solutions of the agrochemical active ingredient at a concentration of at least 0.001 g/l. It may be advantageous to add, to the aqueous composition obtained, further agrochemical active substances and/or adjuvants and additives conventionally used for application, for example stickers or antidrift agents.

The invention also relates to aqueous compositions obtained by dilution with water of an oil dispersion according to the present invention.

The invention also relates to a method of treating crop field which comprises applying to the plants or to the locus thereof an effective amount of an aqueous compositions obtained by dilution of an agrochemical oil dispersion according to the present invention. Application may be made by ground or aerial spray equipment.

### EXAMPLES

The agrochemical oil dispersions were prepared by vigorously mixing the at least one thickener of the invention with a nonionic emulsifier, by heating at 150 °C for 30 minutes. Then this mixture was dispersed in a vegetable oil and an agrochemical active ingredient was added. Finally the mixture was homogeneized and milled.

The compositions of the oil dispersions which were prepared are reported in Table 1 and Table 2, where the amounts of each ingredient are indicated in % by weight (wt%). All the obtained oil dispersions of the invention were easily pourable.

**Table 1**

| | Examples | | | | | |
|---|---|---|---|---|---|---|
| | 1* | 2 | 3 | 4 | 5 | 6 |
| GP-1 | | 0.2 | | 0.1 | 0.04 | 0.16 |
| EB-21 | | | 0.2 | 0.1 | 0.16 | 0.04 |
| Emulson AG 1100 | 20.0 | 19.8 | 19.8 | 19.8 | 19.8 | 19.8 |
| Sunflower oil | 76.0 | 76.0 | 76.0 | 76.0 | 76.0 | 76.0 |
| Nicosulfuron | 4.2 | 4.2 | 4.2 | 4.2 | 4.2 | 4.2 |

| | | | | | | |
|---|---|---|---|---|---|---|
| Emulson AG 1100 = ethoxylated castor oil condensed with tall oil, from Lamberti S.p.A. GP-1= N-lauroyl-L-glutamic acid dibutylamide, from Ajinomoto Co. EB-21= N-2-ethylhexanoyl-L-glutamic acid dibutylamide, from Ajinomoto Co *Comparative | | | | | | |

**Table 2**

| | Examples | | | | | |
|---|---|---|---|---|---|---|
| | 7* | 8* | 9* | 10 | 11 | 12 |
| MANSIN-4 | 0.5 | | | | | |
| MANSIN-5 | | 0.5 | | | | |
| MANSIN-6 | | | 0.5 | | | |
| CIP-34 | | | | 0.4 | 0.4 | 0.6 |
| Emulson AG 1100 | 20.0 | 20.0 | 20.0 | 20.0 | 20.0 | 20.0 |
| Sunflower oil | 75.3 | 75.3 | 75.3 | | 75.4 | 35.4 |
| Corn oil | | | | 75.4 | | |
| Nicosulfuron | 4.2 | 4.2 | 4.2 | 4.2 | 4.2 | |
| Copper oxychloride | | | | | | 44.0 |

| | | | | | | |
|---|---|---|---|---|---|---|
| *Comparative Emulson AG 1100 = ethoxylated castor oil condensed with tall oil, from Lamberti S.p.A. MANSIN-4 = diamide obtained from succinic acid and 2-ethylhexyl amine MANSIN-5 = diamide obtained from fumaric acid and 2-ethylhexyl amine MANSIN-6 = diamide obtained from fumaric acid and butylamine CIP-34 = N-cocoyl-L-glutamic acid dibutylamide | | | | | | |

The storage stability of the oil dispersions described above was evaluated at 0 °C (according to test method CIPAC 39.3), at room temperature and at 54 °C (according to test method CIPAC 46.3) in order to monitor the presence or absence of formation of an oil phase or of a creamy phase in the composition, the presence or absence of the occurrence of aggregation or precipitation, and the presence or absence of the formation of a supernatant over time. About 100 ml of the agrochemical oil dispersions were sealed in glass containers and allowed to rest at 0°C, at room temperature (r.t.) and in oven at 54 °C. The results of the storage stability tests are reported in Table 3.

**Table 3**

| Examples | Stability at 0°C | Stability at r.t. | Stability at 54°C |
|---|---|---|---|
| 1* | separation | separation | separation |
| 2 | ok | ok | ok |
| 3 | ok | ok | ok |
| 4 | ok | ok | ok |
| 5 | ok | ok | ok |
| 6 | ok | ok | ok |
| 7* | separation | separation | separation |
| 8* | separation | separation | separation |
| 9* | separation | separation | separation |
| 10 | ok | ok | ok |
| 11 | ok | ok | ok |
| 12 | ok | ok | ok |

| | | | |
|---|---|---|---|
| *Comparative | | | |

The storage stability test showed that the thickeners of the invention, unlike the diamides tested in Examples 7,8 and 9, allow to obtain agrochemical oil dispersions which have a good stability over time also at 54 °C.

All the ODs prepared showed good emulsion stability, which was evaluated according to CIPAC method 180.

## Claims

1. Agrochemical oil dispersion comprising:
a) from 30 to 85 % by weight (wt%) of a liphophilic phase
b) from 0.01 to 10 wt% of at least one thickener, wherein said thickener is a N-acyl amino acid alkylamide of Formula I: 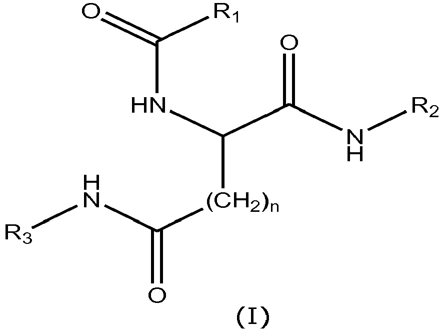 wherein:
• R₁ represents a linear or branched alkyl or alkenyl chain having from 1 to 30 carbon atoms
• R₂ and R₃ each independently represent a linear or branched alkyl or alkenyl chain having from 1 to 20 carbon atoms
• n represents 1 or 2
c) from 5 to 30 wt% of a nonionic surfactant, an anionic surfactant or a mixture thereof
d) from 2 to 70 wt% of at least one agrochemical active ingredient dispersed in said lipophilic phase.

2. Agrochemical oil dispersion according to Claim 1, wherein said agrochemical oil dispersion comprises:
a) from 60 to 80 % by weight (wt%) of a liphophilic phase
b) from 0.1 to 2 wt% of at least one thickener, wherein said thickener is a N-acyl amino acid alkylamide of Formula I: 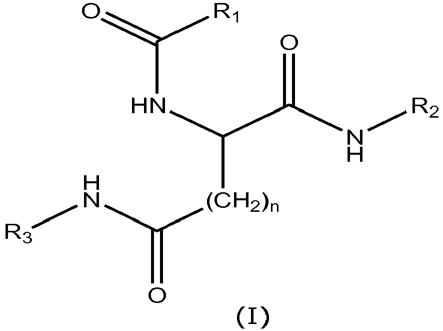 wherein:
• R₁ represents a linear or branched alkyl or alkenyl chain having from 4 to 20 carbon atoms
• R₂ and R₃ each independently represent a linear or branched alkyl or alkenyl chain having from 2 to 10 carbon atoms
• n represents 2
c) from 10 to 25 wt% of a nonionic surfactant, an anionic surfactant or a mixture thereof
d) from 4 to 20 wt% of at least one agrochemical active ingredient dispersed in said lipophilic phase.

3. Agrochemical oil dispersion according to Claim 1, wherein the thickener is N-lauroyl-L-glutamic acid dibutylamide or N-2-ethylhexanoyl-L-glutamic acid dibutylamide.

4. Agrochemical oil dispersion according to Claim 1, wherein the lipophilic phase is a vegetable oil selected from the group comprising corn oil, soybean oil, sunflower oil, rapeseed oil, transesterification products thereof, or mixtures thereof.

5. Agrochemical oil dispersion according to Claim 1, wherein the agrochemical active ingredient is selected among fungicides, bactericides, insecticides, acaricides, nematicides, herbicides, aracnicides or mixtures thereof.

6. Agrochemical oil dispersion according to Claim 1, wherein the agrochemical active ingredient is selected in the group comprising sulfonylureas, sulfamylureas, sulfonamides, imidazolinones, pyrimidinyloxypyridinecarboxylic or pyrimidyloxybenzoic acid derivatives; triketones; neonicotinoids; avermectins; pyrethroids; bisamides; triazoles; mandelamides and strobilurins; alkanamides; anilinopyrimidines; arylaminopropionic acids; aryloxyalkanoic acids; aryloxyphenoxypropionates; benzamides; benzimidazoles; chloroacetamides; cyclohexanedione oximes; dicarboximides; dinitroanilines; diphenyl ethers; imidazoles; hydroxybenzonitriles; isoxazoles; morpholines; guanidines; carbamates, dithiocarbamates, dimethyldithiocarbamates; phosphonates; phthalimides; sulphamides; non-ester pyrethroids; organophosphorus; oxime carbamates; phenylamides; phosphinic acids; pyrazoles; pyridines; pyridinecarboxamides; pyridinecarboxylic acids; quinoline carboxyilic acids; semi-carbazones; triazines; triazinones; ureas; benzoylureas.

7. Agrochemical oil dispersion according to Claim 1, wherein the agrochemical active ingredient is a sulfonylurea or a triketone.

8. Agrochemical oil dispersion according to Claim 1, wherein the surfactant is a polyethoxylated hydroxy fatty acid triglyceride or a fatty ester thereof.

9. Agrochemical formulation obtained by dilution with water of the agrochemical oil dispersion according any of the Claims from 1 to 8.

## Patentansprüche

1. Agrochemische Öldispersion, umfassend:
a) von 30 bis 85 Gewichtsprozent (Gew.-%) einer lipophilen Phase
b) von 0,01 bis 10 Gew.-% von mindestens einem Verdickungsmittel, wobei das Verdickungsmittel ein N-Acyl-Aminosäure-Alkylamid mit der Formel I ist: 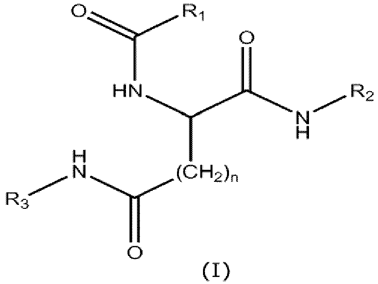 wobei:
• R₁ für eine lineare oder verzweigte Alkyl- oder Alkenylkette mit 1 bis 30 Kohlenstoffatomen steht
• R₂ und R₃ jeweils unabhängig voneinander für eine lineare oder verzweigte Alkyl- oder Alkenylkette mit 1 bis 20 Kohlenstoffatomen stehen
• n für 1 oder 2 steht
c) von 5 bis 30 Gew.-% eines nichtionischen Tensids, eines anionischen Tensids oder einer Mischung davon
d) von 2 bis 70 Gew.-% von mindestens einem in der lipophilen Phase dispergierten agrochemischen Wirkstoff.

2. Agrochemische Öldispersion nach Anspruch 1, wobei die agrochemische Öldispersion Folgendes umfasst:
a) von 60 bis 80 Gewichtsprozent (Gew.-%) einer lipophilen Phase
b) von 0,1 bis 2 Gew.-% von mindestens einem Verdickungsmittel, wobei das Verdickungsmittel ein N-Acyl-Aminosäure-Alkylamid mit der Formel I ist: 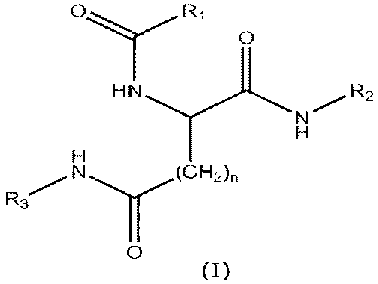 wobei:
• R₁ für eine lineare oder verzweigte Alkyl- oder Alkenylkette mit 4 bis 20 Kohlenstoffatomen steht
• R₂ und R₃ jeweils unabhängig voneinander für eine lineare oder verzweigte Alkyl- oder Alkenylkette mit 2 bis 10 Kohlenstoffatomen stehen
• n für 2 steht
c) von 10 bis 25 Gew.-% eines nichtionischen Tensids, eines anionischen Tensids oder einer Mischung davon
d) von 4 bis 20 Gew.-% von mindestens einem in der lipophilen Phase dispergierten agrochemischen Wirkstoff.

3. Agrochemische Öldispersion nach Anspruch 1, wobei das Verdickungsmittel N-Lauroyl-L-Glutaminsäure-Dibutylamid oder N-2-Ethylhexanoyl-L-Glutaminsäure-Dibutylamid ist.

4. Agrochemische Öldispersion nach Anspruch 1, wobei die lipophile Phase ein pflanzliches Öl ausgewählt aus der Gruppe umfassend Maiskeimöl, Sojabohnenöl, Sonnenblumenöl, Rapsöl, Umesterungsprodukte davon, oder Mischungen davon ist.

5. Agrochemische Öldispersion nach Anspruch 1, wobei der agrochemische Wirkstoff ausgewählt aus Fungiziden, Bakteriziden, Insektiziden, Akariziden, Nematiziden, Herbiziden, Arachniziden oder Mischungen davon ist.

6. Agrochemische Öldispersion nach Anspruch 1, wobei der agrochemische Wirkstoff ausgewählt ist aus der Gruppe umfassend Sulfonylharnstoffe, Sulfamylharnstoffe, Sulfonamide, Imidazolinone, Pyrimidinyloxypyridincarbonsäure- oder Pyrimidyloxybenzoesäurederivate; Triketone; Neonicotinoide; Avermectine; Pyrethroid; Bisamide; Triazole; Mandelamide und Strobilurine; Alkanamide; Anilinopyrimidine; Arylaminopropionsäuren; Aryloxyalkansäuren; Aryloxyphenoxypropionate; Benzamide; Benzimidazole; Chloroacetamide; Cyclohexandionoxime; Dicarboximide; Dinitroaniline; Diphenylether; Imidazole; Hydroxybenzonitrile; Isoxazol; Morpholine; Guanidine; Carbamate; Dithiocarbamate; Dimethyldithiocarbamate; Phosphonate; Phthalimide; Sulfamide; nicht veresterte Pyrethroide; Organophosphorverbindungen; Oximecarbamate; Phenylamide; Phosphinsäuren; Pyrazole; Pyridine; Pyridincarboxamide; Pyridincarbonsäuren; Chinolincarbonsäuren; Semicarbazone; Triazine; Triazinone; Harnstoffe; Benzoylharnstoffe.

7. Agrochemische Öldispersion nach Anspruch 1, wobei der agrochemische Wirkstoff ein Sulfonylharnstoff oder ein Triketon ist.

8. Agrochemische Öldispersion nach Anspruch 1, wobei das Tensid ein polyethoxyliertes Hydroxyfettsäuretriglycerid oder ein Fettsäureester davon ist.

9. Agrochemische Formulierung erhalten durch Verdünnen der agrochemischen Öldispersion nach einem der Ansprüche 1 bis 8 mit Wasser.

## Revendications

1. Dispersion d'huile agrochimique comprenant
a) de 30 à 85 % en poids d'une phase liphophile
b) de 0,01 à 10 % en poids d'au moins un épaississant, dans laquelle ledit épaississant est un N-acyl-acide aminé alkylamide de formule I : 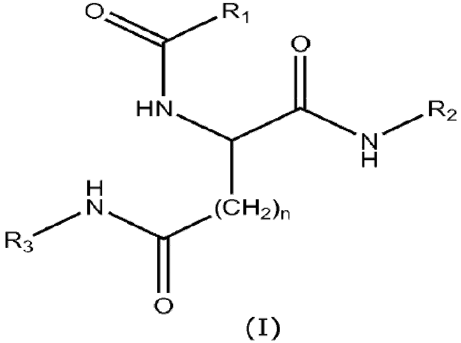 dans laquelle :
• R₁ représente une chaîne alkyle ou alcényle linéaire ou ramifiée ayant de 1 à 30 atomes de carbone
• R₂ et R₃ représentent chacun indépendamment une chaîne alkyle ou alcényle linéaire ou ramifiée ayant de 1 à 20 atomes de carbone
• n représente 1 ou 2
c) de 5 à 30 % en poids d'un agent de surface non ionique, d'un agent de surface anionique ou d'un mélange de ceux-ci
d) de 2 à 70 % en poids d'au moins un ingrédient actif agrochimique dispersé dans ladite phase lipophile.

2. Dispersion d'huile agrochimique selon la revendication 1, dans laquelle ladite dispersion d'huile agrochimique comprend :
a) de 60 à 80 % en poids d'une phase lipophile
b) de 0,1 à 2 % en poids d'au moins un épaississant, dans laquelle ledit épaississant est un N-acyl-acide aminé alkylamide de formule I : 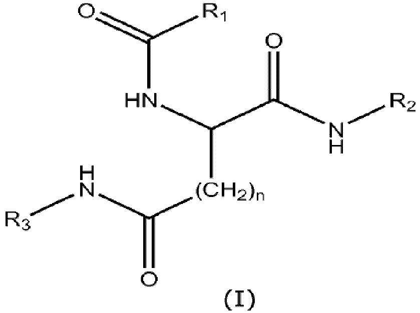 dans laquelle :
• R₁ représente une chaîne alkyle ou alcényle linéaire ou ramifiée ayant de 4 à 20 atomes de carbone
• R₂ et R₃ représentent chacun indépendamment une chaîne alkyle ou alcényle linéaire ou ramifiée ayant de 2 à 10 atomes de carbone
• n représente 2
c) de 10 à 25 % en poids d'un agent de surface non ionique, d'un agent de surface anionique ou d'un mélange de ceux-ci
d) de 4 à 20 % en poids d'au moins un ingrédient actif agrochimique dispersé dans ladite phase lipophile.

3. Dispersion d'huile agrochimique selon la revendication 1, dans laquelle l'épaississant est le dibutylamide de l'acide N-lauroyl-L-glutamique ou le dibutylamide de l'acide N-2-éthylhexanoyl-L-glutamique.

4. Dispersion d'huile agrochimique selon la revendication 1, dans laquelle la phase lipophile est une huile végétale choisie dans le groupe comprenant l'huile de maïs, l'huile de soja, l'huile de tournesol, l'huile de colza, leurs produits de transestérification ou leurs mélanges.

5. Dispersion d'huile agrochimique selon la revendication 1, dans laquelle l'ingrédient actif agrochimique est choisi parmi les fongicides, les bactéricides, les insecticides, les acaricides, les nématicides, les herbicides, les acaricides ou leurs mélanges.

6. Dispersion d'huile agrochimique selon la revendication 1, dans laquelle l'ingrédient actif agrochimique est choisi dans le groupe comprenant les sulfonylurées, les sulfamylurées, les sulfonamides, les imidazolinones, les dérivés de l'acide pyrimidinyloxypyridinecarboxylique ou pyrimidyloxybenzoïque ; les trikétones ; les néonicotinoïdes ; les avermectines ; les pyréthroïdes ; les bisamides ; les triazoles ; les mandélamides et les strobilurines ; les alcanamides ; les anilinopyrimidines ; les acides arylaminopropioniques ; les acides aryloxyalcanoïques ; les aryloxyphénoxypropionates ; les benzamides ; les benzimidazoles ; les chloroacétamides ; les cyclohexanedione oximes ; les dicarboximides ; les dinitroanilines ; les diphényléthers ; les imidazoles ; les hydroxybenzonitriles ; les isoxazoles ; les morpholines ; les guanidines ; les carbamates, les dithiocarbamates, les diméthyldithiocarbamates ; les phosphonates ; les phtalimides ; les sulfamides ; les pyréthroïdes non esters ; les organophosphorés ; les oximes carbamates ; les phénylamides ; les acides phosphiniques ; les pyrazoles ; les pyridines ; les pyridinecarboxamides ; les acides pyridinecarboxyliques ; les acides quinoléine carboxyiliques ; les semi-carbazones ; les triazines ; les triazinones ; les urées ; les benzoylurées.

7. Dispersion d'huile agrochimique selon la revendication 1, dans laquelle l'ingrédient actif agrochimique est une sulfonylurée ou une tricétone.

8. Dispersion d'huile agrochimique selon la revendication 1, dans laquelle l'agent de surface est un triglycéride d'acide gras hydroxy polyéthoxylé ou un ester gras de celuici.

9. Formulation agrochimique obtenue par dilution dans l'eau de la dispersion d'huile agrochimique selon l'une quelconque des revendications 1 à 8.
